# EUROPEAN PATENT APPLICATION

(11) **EP 1 696 544 A1**
(43) Date of publication of application: **30.08.2006**
(21) Application number: 04820115.6
(22) Date of filing: 24.11.2004
(51) Int. Cl.: H02M 3/28

(54) **DC/DC CONVERTER**

(30) Priority: 11.12.2003 JP 2003413162
(71) Applicant: HONDA MOTOR CO., Ltd., Tokyo 107-8556 (JP)
(72) Inventor: EGUCHI, Hiroyuki; c/o Kabushiki Kaisha Honda, Wako-shi, Saitama 3510193 (JP); SHIMIZU, Motohiro; c/o Kabushiki Kaisha Honda, Wako-shi, Saitama 3510193 (JP)
(74) Representative: HOFFMANN EITLE
(86) International application number: PCT/JP2004/017371
(87) International publication number: WO 2005/057768

(57) **Abstract**

To provide a DC-DC converter allowing miniaturization of a voltage transformer without fear of reducing conversion efficiency due to saturation of the transformer and allowing enhancement of conversion efficiency by suppressing switching loss. An LC resonance circuit 3 is inserted on the secondary side of a transformer 1. When driving means 4 alternately turn on and of f a pair of switching means 2-1, 2-2, an output is obtained on the secondary side via the transformer 1. A current transformer 5 for current detection, a current value detection portion 6 and a current value comparison portion 7 detect a difference between each resonance current value per half cycle due to the operation of the LC resonance circuit 3. In response to its result, the drive means 4 regulate automatically on-state duty ratio of the switching means 2-1, 2-2 so as to align the resonance current values per half cycle.

## Description

### TECHNICAL FIELD

The present invention relates to a DC-DC converter, particularly to a DC-DC converter that can suppress magnetic saturation of a voltage converting transformer, miniaturize the transformer, suppress switching loss, and enhance converting efficiency.

### BACKGROUND ART

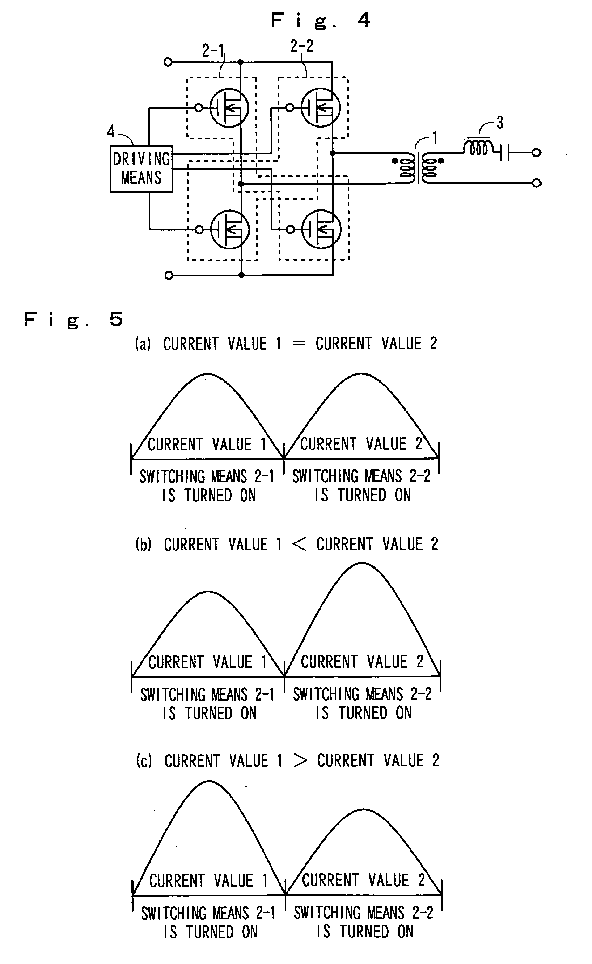

A current-resonant type DC-DC converter is equipped with a resonant circuit connected in series with switching means and turns ON and OFF the switching means at a resonant frequency of the resonant circuit. FIG. 4 shows a principle of the DC-DC- converter. On the primary side of a transformer 1, a pair of switching means 2-1 and 2-2 having a bridge-connected structure comprised of, for example, four switching elements is provided, and on the secondary side thereof , a resonant circuit 3 is provided. The resonant circuit 3 is comprised of a resonating choke (reactor) and a resonating capacitor. It is to be noted that on the secondary side, rectifying means and smoothing means, which are not shown though, are further provided.

If the pair of switching means 2-1 and 2-2 is turned ON or OFF alternately by driving means 4 at a resonant frequency of the resonant circuit 3, a step-up or step-down operation occurs via the transformer 1 at a frequency that corresponds to the frequency at which these switching means has been turned ON or OFF.

In this case, a resonant frequency f of the resonant circuit 3 is given as f=1/2π√LC, supposing inductance of the choke of the resonant circuit 3 to be L and capacitance of the capacitor thereof to be C; so that if L=130µH and C=0.47µF, f≅20.4kHz, for example.

Actually, element constants (inductance, capacitance) of such elements as the choke and the capacitor of the resonant circuit 3 in the DC-DC converter fluctuate and change as time passes by and also with an ambient temperature in accordance with temperature characteristics of the elements. If these fluctuations or changes cause a shift between a frequency at which the pair of switching means 2-1 and 2-2 is turned ON or OFF and a resonant frequency of the resonant circuit 3, switching loss increases, thereby making it impossible to obtain sufficient performance.

The following Patent Document 1 discloses a technology by which, a lapse of time during which a resonant current flows through the switching means is calculated based on an input voltage and an output current, so that when a lapse of time that has elapsed from a moment at which the switching means has been turned ON equals this calculated lapse of time, the switching means are turned OFF, to eliminate the shift between a driving frequency for the switching means and resonant frequency of the resonant circuit.
Patent Document 1: JP 2002-058240 A

### DISCLOSURE OF THE INVENTION

### PROBLEM TO BE SOLVED BY THE INVENTION

According the technology disclosed in this Patent Document 1, a shift between a driving frequency for the switching means and a resonant frequency of the resonant circuit can be eliminated. However, in a DC-DC converter, which is typically configured as a bridge-type or a half-bridge-type structure in which a pair of switching means composed of semiconductor switching elements is turned ON or OFF alternately as shown in FIG. 4, a difference of the value in resonant current may occur in some cases per half cycle owing to fluctuations in operation of the semiconductor switching elements and inductance due to wiring of circuit interconnections.

FIG. 5 show waveforms of a current that flows when the pair of switching means 2-1 and 2-2 is turned ON or OFF alternately, FIG. 5 (a) of which shows a case where a value of a current (current value 1) that flows when the switching means 2-1 is turned ON is equal to a value of a current (current value 2) that flows when the switching means 2-2 is turned ON, FIG. 5(b) of which shows a case where the current value 1 is smaller than the current value 2, and FIG. 5(c) of which shows a case where the current value 1 is larger than the current value 2.

If a difference occurs per half cycle in value of a resonant current, a DC offset due to this difference may in some cases cause saturation in a voltage converting transformer, thus resulting in reduction in converting efficiency. To eliminate fear of reduction in converting efficiency caused by this DC offset, the transformer needs to be large-sized so that its capacity may be increased.

Further, due to a DC offset of a resonant current, a switching timing of the switching means cannot maintained extremely close to a zero-crossing point of the resonant current, thus making it difficult to avoid an increase in switching loss.

To solve these problems, the present invention has been developed, and it is an object of the present invention to provide a DC-DC converter that can eliminate fear of reduction in converting efficiency owing to saturation of a voltage converting transformer, miniaturize the voltage converting transformer, and suppress switching loss while maintaining a switching timing of switching means close to a zero-crossing point of a resonant current.

### MEANS FOR SOLVING PROBLEM

The first feature of this invention is that a DC-DC converter comprising: a transformer having primary side terminals, secondary side terminals, a primary side winding, and a secondary side winding and determining a voltage converting ratio; a pair of switching means which is interposed between said primary side terminals and said primary side winding, a LC resonant circuit comprised of a resonating reactor connected in series with said pair of switching means, and a resonating capacitor that resonates with said resonating reactor; and a driving means for alternately turning said pair of switching means ON/OFF, wherein: a resonant current detecting means for detecting a resonant current caused by an operation of said LC resonant circuit and means for feeding a detected output of said resonant current detecting means back to said driving means are provided; and said driving means drives said pair of switching means by correcting their on-state lapses of time so that their on-state resonant currents may be nearly equal to each other based on the detected output of said resonant current detecting means.

The second feature of this invention is that the DC-DC converter according to claim 1, wherein said resonant current detecting means is provided on the primary side of said transformer.

The third feature of this invention is that a bi-directional DC-DC converter comprising: a transformer having low-voltage side terminals, high-voltage side terminals, a low-voltage side winding, and a high-voltage side winding and determining a voltage converting ratio; a low-voltage side pair of switching means interposed between said low-voltage side terminals and said low-voltage side winding; a high-voltage side pair of switching means interposed between said high-voltage side terminals and said high-voltage side winding; a low-voltage side rectifying element connected in parallel with each of switching elements in said low-voltage side pair of switching means; a high-voltage side rectifying element connected in parallel with each of switching elements in said high-voltage side pair of switching means; and a driving means for turning ON/OFF the switching elements in said low-voltage side pair of switching means and the switching elements in said high-voltage side pair of switching means, wherein: a LC resonant circuit is interposed between said high-voltage side winding and said high-voltage side pair of switching means or between said low-voltage side winding and said low-voltage side pair of switching means; a resonant current detecting means for detecting a resonant current caused by an operation of said LC resonant circuit and means for feeding a detected output of said resonant current detecting means back to said driving means are provided; and said driving means drives said low-voltage side pair of switching means or said high-voltage side pair of switching means by correcting their on-state lapses of time so that their on-state resonant currents may be nearly equal to each other based on the detected output of said resonant current detecting means.

The fourth feature of this invention is that the DC-DC converter according to claim 3, wherein said LC resonant circuit is interposed between said high-voltage side winding and said high-voltage pair of switching means.

The fifth feature of this invention is that the DC-DC converter according to claim 3, wherein said low-voltage side pair of switching means and said high-voltage pair of switching means are each configured by interconnecting four switching elements in a bridge.

### EFFECT OF THE INVENTION

According to the first feature of the present invention, it is possible to nearly equalize values of resonant currents that flow through a pair of switching means always, thereby preventing occurrence of a DC offset. As a result, a fear of saturation in a voltage converting transformer can be eliminated, thereby enhancing efficiency in conversion by a small-sized transformer. Further, it is possible to maintain a switching timing of the switching means close to a zero-crossing point of a resonant current, thereby suppressing switching loss. Furthermore, even if element constants of semiconductor switching elements fluctuate through a stage of manufacturing or change as time passes by or due to an ambient temperature after being incorporated into a DC-DC converter, the resonant currents flowing through the pair of switching means are automatically adjusted to nearly the same value, thereby facilitating designing the circuit and the elements.

According to the second feature of the present invention, resonant frequency detecting means and the driving means can share a common voltage reference line and, therefore, need not be insulated from each other.

According to the third feature of the present invention, low-voltage side switching means and high-voltage side switching means are operated at the same driving timing to enable conversion that accommodate power bi-directionally, in which case fear of reduction in converting efficient caused by a DC offset can be eliminated. Further, a current waveform due to switching of the switching means is shaped into a sine wave through a LC resonant circuit, so that a turn-OFF timing of a switching element can be set close to a zero-crossing point of a resonant current. It is thus possible to switch the switching means near the zero-crossing point, thereby greatly suppressing switching loss.

According to the fourth feature of the present invention, the high-voltage side where the LC resonant circuit is provided has a small value of a current flowing through it, so that loss by the LC resonant circuit can be suppressed.

According to the fifth feature of the present invention, the switching means and a rectifying element on each of the high-voltage and low-voltage sides make up a so-called bridge-type single-phase inverter, so that a structure of a transformer can be simplified. Further, conversion efficiency can be enhanced because it is unnecessary to prolong a short-circuit-preventing dead time for the switching element owing to a lag in transmission by the transformer or reduce a driving time for the switching element.

### BRIEF DESCRIPTION OF THE DRAWINGS

FIG. 1 is a circuit diagram showing a principle of a DC-DC converter according to the present invention;
FIG. 2 is a specific circuit diagram showing an embodiment of the DC-DC converter according to the present invention;
FIG. 3 is a circuit diagram showing an example where the present invention is applied;
FIG. 4 is a diagram showing a principle of another DC-DC converter; and
FIG. 5 is a current waveform chart showing operations of the DC-DC converter.

### DESCRIPTION OF THE REFERENCE NUMERALS

1...transformer, 1-1...low-voltage side winding, 1-2...high-voltage side winding, 2-1,2-5,10-1,10-2...switching means, 3... LC resonant circuit, 4...driving means (control circuit), 5...resonant current detecting current transformer, 6...frequency detecting unit, 7...current value comparing unit, 8-1,8-2...low-voltage side terminal, 9-1,9-2...high-voltage side terminal, 11,12...smoothing capacitor, 13...generator, 14...battery, 15...driving inverter (rectifying circuit) , 16...regulator, 17...inverter, 100...bi-directional DC-DC converter

### BEST MODE FOR CARRYING OUT THE INVENTION

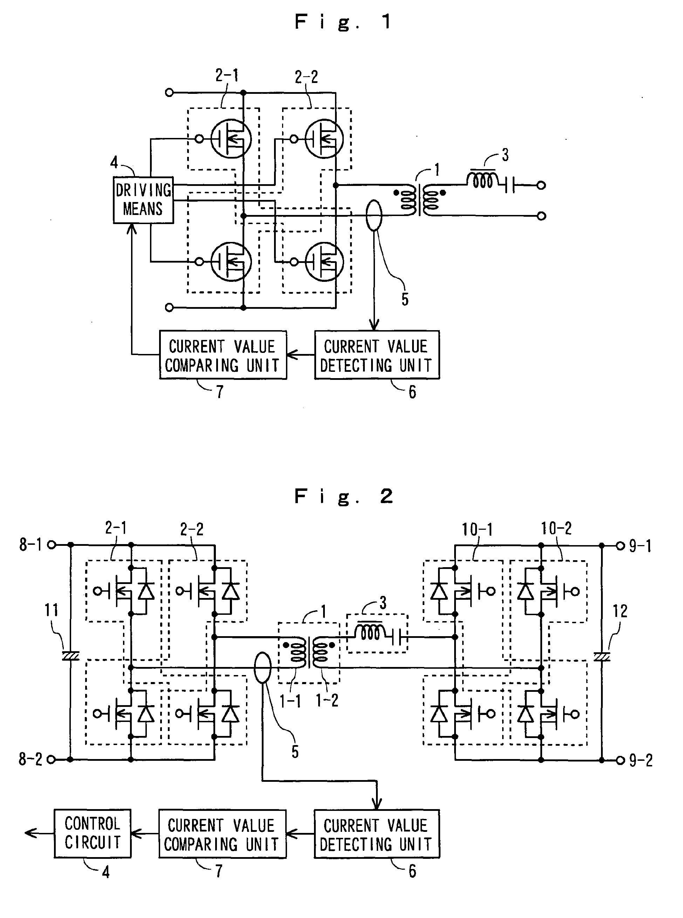

The present invention will be described below with reference to drawings. FIG. 1 is a circuit diagram showing a principle of a DC-DC converter according to the present invention. In the following, the same components as those of FIG. 4 or similar components are indicated by the same reference numerals. FIG. 1 is different from FIG. 4 in that resonant current detecting means is provided which detects a resonant current due to operations of a resonant circuit 3 so that a value of a resonant current detected by this means may be fed back to driving means 4. The resonant current detecting means is composed of a resonant current detecting current transformer 5 arranged on a line through which, for example, a resonant current on the primary side of a transformer 1 flows, a current value detecting unit 6 for detecting a value of a detected resonant current, and a current value comparing unit 7 for comparing a detected resonant current value to a threshold value and feeding a result of this comparison back to the driving means 4.

Next, operations of FIG. 1 are described. First, the driving means 4 alternately turns a pair of switching means 2-1 and 2-2 ON or OFF at a resonant frequency that has been set on the basis of element constants of circuit elements of the resonant circuit 3. In such a manner, DC-DC conversion is carried out from the primary side to the secondary side of the transformer 1.

The resonant current detecting current transformer 5 detects a resonant current flowing through a winding on the primary side of the transformer 1, the current value detecting unit 6 detects a value, per half cycle, of a resonant current detected by the resonant current detecting current transformer 5, and the current value comparing unit 7 compares a detected per-half-cycle resonant current value to a constant threshold value. A result of comparison by the current value comparing unit 7 is fed back to the driving means 4.

The driving means 4 alternately turns the pair of switching means 2-1 and 2-2 ON or OFF based on a result of comparison by the current value comparing unit 7. For example, if a value of a current (current value 1) that flows when the switching means 2-1 is turned ON is equal to a value of a current (current value 2) that flows when the switching means 2-2 is turned ON as shown in FIG. 5(a), the driving means 4 continues to turn them ON or OFF; however, if the current value 1 is smaller than the current value 2 as shown in FIG. 5(b), it increases an on-state duty ratio of the switching means 2-1 and decreases the on-state duty ratio of the switching means 2-2. If the current value 1 is larger than the current value 2 as shown in FIG. 5 (c) , on the other hand, it decreases the on-state duty ratio of the switching means 2-1 and increases that of the switching means 2-2.

In such a manner, the current values that flow when the pair of switching means 2-1 and 2-2 is alternately turned ON are automatically adjusted to be nearly equal to each other. Therefore, even if the element constants of the switching elements of the switching means 2-1 and 2-2 fluctuate through a stage of manufacturing or change as time passes by or due to an ambient temperature after being incorporated into the DC-DC converter, a per-half-cycle difference in resonant current is suppressed.

FIG. 2 is a specific circuit diagram showing an embodiment of the DC-DC converter according to the present invention. The present embodiment is an example where it has been configured as a bi-directional DC-DC converter in which power is accommodated bi-directionally between a DC power source connected between low-voltage side terminals 8-1 and 8-2 and a DC power source connected between high-voltage side terminals 9-1 and 9-2. In the following, the side of the low-voltage side terminals 8-1 and 8-2 maybe referred to as the primary side and the side of the high-voltage side terminals 9-1 and 9-2 may be referred to as the secondary side in some cases.

The transformer 1 includes a low-voltage side winding 1-1 on the primary side and a high-voltage side winding 1-2 on the secondary side. A step-up ratio of this bi-directional DC-DC converter is determined by a winding ratio between the low-voltage side winding 1-1 and the high-voltage side winding 1-2. The low-voltage side pair of switching means 2-1 and 2-2 is interposed between the low-voltage side terminals 8-1 and 8-2 and the low-voltage side winding 1-1, while high-voltage side pair of switching means 10-1 and 10-2 is interposed between the high-voltage side terminals 9-1 and 9-2 and the high-voltage side winding 1-2.

The pair of switching means 2-1 and 2-2 can be configured by interconnecting four switching elements (hereinafter written as FETs) such as FETs in a bridge and the pair of switching means 10-1 and 10-2 can also be configured by interconnecting four FETs in a bridge.

The FETs of the switching means 2-1, 2-2, 10-1, and 10-2 are each connected in parallel with a rectifying element such as a diode. Such a rectifying element may be either a FET-parasitic diode or a separately connected junction diode. Together with the parallel-connected rectifying elements, the pair of switching means 2-1 and 2-2 and the pair of switching means 10-1 and 10-2 can each be thought of as a switching/rectifying unit.

Between the high-voltage side terminals 9-1 and 9-2 and the high-voltage side winding 1-2, the LC resonant circuit 3 is interposed. The FETs of the switching means 2-1, 2-2, 10-1, and 10-2 are turned ON or OFF by a control circuit 4 composed of a CPU and the like. It is to be noted that a capacitor 11 connected between the low-voltage side terminals 8-1 and 8-2 and a capacitor 12 connected between the high-voltage side terminals 9-1 and 9-2 are an output smoothing capacitor.

The resonant current detecting current transformer 5 is interposed between the low-voltage side winding 1-1 in the transformer 1 and the pair of switching means 2-1 and 2-2, and an output detected by the transformer 5 is supplied to the frequency detecting unit 6 to detect a current value, which is in turn supplied to the current value comparing unit 7 to be compared to the constant threshold value.

The control circuit 4 composed of the CPU etc. turns ON and OFF the FETs in the low-voltage side pair of switching means 2-1 and 2-2 and the FETs in the high-voltage side pair of switching means 10-1 and 10-2, based on a result of comparison by the current value comparing unit 7. It is to be noted that the frequency detecting unit 6 and the current value comparing unit 7 can be configured also by software as part of the control circuit 4 and a current value can be detected by deciding its magnitude in specific position such as a peak position of a resonant current waveform, for example.

Operations of FIG. 2 are generally described. First, to supply power from the primary side (left side in the figure) to the secondary side (right side in the figure) , the low-voltage side pair of switching means 2-1 and 2-2 is alternately turned ON or OFF. A current caused by the turn-ON/OFF operations flows through the low-voltage side winding 1-1 in the transformer 1.

A current induced into the high-voltage side winding 1-2 is input via the LC resonant circuit 3 into the high-voltage side pair of switching means 10-1 and 10-2 to be rectified by the rectifying elements connected in parallel with their FETs and smoothed by the smoothing capacitor 12 and output. In this case, the currents flowing on the primary side and the secondary side are shaped into a sine wave owing to the presence of the LC resonant circuit 3.

A function of feedback through the current detecting current transformer 5, the current detecting unit 6, and the current comparing unit 7 causes values of currents flowing per half cycle when the switching means 2-1 and 2-2 are alternately turned ON to be automatically adjusted to be equal to each other.

Although the above operations is performed in the case of supplying power from the primary side to the secondary side, the same operation is also performed in the case of supplying power from the secondary side to the primary side. These operations hold true further with the case of automatically transferring power mutually between the primary side and the secondary side in a condition where they are completely synchronized with each other, that is, they are driven with the same driving signal. In this case, power is transferred with a relative voltage difference between the primary side and the secondary side owing to a transformer's winding ratio.

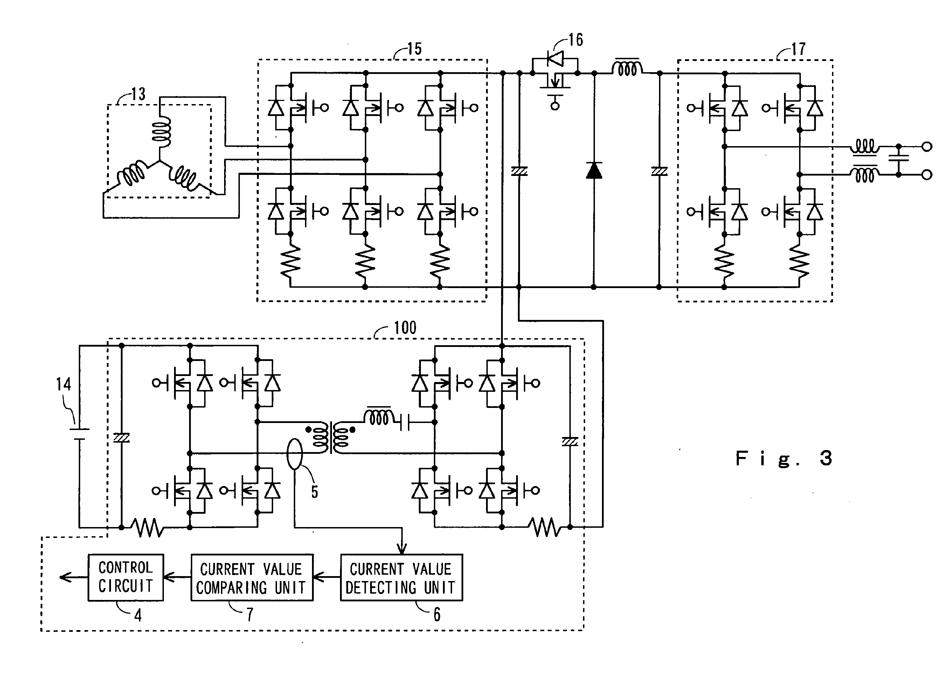

FIG. 3 is a circuit diagram showing an example where the present invention is applied. In the present example, the DC-DC converter of FIG. 2 has been applied to a system in which a DC power source including a generator 13 and a battery 14 accommodate power to each other so that power may be supplied to a load. The generator 13 is a three-phase multi-polar magneto-generator of, for example, an engine-driven type.

In the present application example also, the function of feedback through the current detecting current transformer 5, the current detecting unit 6, and the current comparing unit 7 causes values of currents flowing per half cycle when the pair of switching means is alternately turned ON to be equal to each other. First, to start an engine, the low-voltage side pair of switching means in a bi-directional DC-DC converter 100 is alternately turned ON and a resultantly stepped-up DC voltage of the battery 14 is applied to a driving inverter (rectifying circuit) 15. The driving inverter 15 converts the applied DC voltage into a three-phase AC voltage and applies it to the generator 13 to actuate it as an engine-starter generator.

When the engine is started, the generator 13 is driven by the engine, to stop switching of the driving inverter 15. An output of the generator 13 is rectified by the rectifying circuit (driving inverter) 15, regulatedbyaregulator16, and converted byan inverter 17 into AC power having a predetermined frequency so that it may be supplied to the load.

If a voltage of the battery 14 has dropped, by alternately turning ON the high-voltage side pair of switching means in the bi-directional DC-DC converter 100, an output of the rectifying circuit 15 can be stepped down by using the bi-directional DC-DC converter 100, to charge the battery 14 with the stepped-down voltage.

When the generator 13 is being driven by the engine, it is possible to drive the low-voltage side pair of switching means and the high-voltage side pair of switching means in the bi-directional DC-DC converter 100 in a condition where they are completely synchronized with each other. It is thus possible to automatically transfer power mutually between the rectifying circuit (driving inverter) 15 and the battery 14 in accordance with a relative voltage difference between the primary side and the secondary side owing to a transformer's winding ratio.

Although in the present application example the DC power source made of an engine-driven generator and the battery have accommodated power to each other, the present invention is not limited to it and can be applied also to a case where power is accommodated between appropriate DC power source systems such as a battery, an ordinary generator, a solar energy generator, a wind power generator, or a fuel cell, for example, power is transferred mutually between a traveling power system and an electrical security component system in a hybrid vehicle.

Although the embodiments have been described above, the present invention canbemodifiedvariously. For example, a resonant current can be detected also by inserting a resistor in place of a resonant current detecting current transformer along a line through which a resonant current flows. Further, the current detecting current transformer or the resistor can be provided on the secondary side instead of the primary side and the LC resonant circuit can also be provided on the primary side not on the secondary side.

## Claims

1. A DC-DC converter comprising:
a transformer having primary side terminals, secondary side terminals, a primary side winding, and a secondary side winding and determining a voltage converting ratio;
a pair of switching means which is interposed between said primary side terminals and said primary side winding,
a LC resonant circuit comprised of a resonating reactor connected in series with saidpair of switchingmeans, anda resonating capacitor that resonates with said resonating reactor; and
a driving means for alternately turning said pair of switching means ON/OFF, wherein:
a resonant current detecting means for detecting a resonant current caused by an operation of said LC resonant circuit and means for feeding a detected output of said resonant current detecting means back to said driving means are provided; and
said driving means drives said pair of switching means by correcting their on-state lapses of time so that their on-state resonant currents may be nearly equal to each other based on the detected output of said resonant current detecting means.

2. The DC-DC converter according to claim 1, wherein said resonant current detecting means is provided on the primary side of said transformer.

3. A bi-directional DC-DC converter comprising:
a transformer having low-voltage side terminals, high-voltage side terminals, a low-voltage side winding, and a high-voltage side winding and determining a voltage converting ratio;
a low-voltage side pair of switching means interposed between said low-voltage side terminals and said low-voltage side winding;
a high-voltage side pair of switching means interposed between said high-voltage side terminals and said high-voltage side winding;
a low-voltage side rectifying element connected in parallel with each of switching elements in said low-voltage side pair of switching means;
a high-voltage side rectifying element connected in parallel with each of switching elements in said high-voltage side pair of switching means; and
a driving means for turning ON/OFF the switching elements in said low-voltage side pair of switching means and the switching elements in said high-voltage side pair of switching means, wherein:
a LC resonant circuit is interposed between said high-voltage side winding and said high-voltage side pair of switching means or between said low-voltage side winding and said low-voltage side pair of switching means;
a resonant current detecting means for detecting a resonant current caused by an operation of said LC resonant circuit and means for feeding a detected output of said resonant current detecting means back to said driving means are provided; and
said driving means drives said low-voltage side pair of switching means or said high-voltage side pair of switching means by correcting their on-state lapses of time so that their on-state resonant currents may be nearly equal to each other based on the detected output of said resonant current detecting means.

4. The DC-DC converter according to claim 3, wherein said LC resonant circuit is interposed between said high-voltage side winding and said high-voltage pair of switching means.

5. The DC-DC converter according to claim 3, wherein said low-voltage side pair of switching means and said high-voltage pair of switching means are each configured by interconnecting four switching elements in a bridge.
